# EUROPÄISCHE PATENTSCHRIFT

(11) **EP 1 280 981 B1**
(45) Veröffentlichungstag und Bekanntmachung des Hinweises auf die Patenterteilung: **09.02.2005**
(21) Anmeldenummer: 01933869.8
(22) Anmeldetag: 23.04.2001
(51) Int. Cl.: F01D 25/12, F02C 7/141

(54) **VERFAHREN UND VORRICHTUNG ZUR KÜHLUNG EINES EINSTRÖM-WELLENBEREICHS EINER DAMPFTURBINE**
METHOD AND DEVICE FOR COOLING THE INFLOW AREA OF THE SHAFT OF A STEAM TURBINE
DISPOSITIF ET PROCEDE POUR REFROIDIR LA ZONE D'ARBRE D'ENTREE D'UNE TURBINE A VAPEUR

(30) Priorität: 05.05.2000 EP 00109647
(43) Veröffentlichungstag der Anmeldung: 05.02.2003
(73) Patentinhaber: SIEMENS AKTIENGESELLSCHAFT, 80333 München (DE)
(72) Erfinder: ENDRIES, Hans-Joachim, 45359 Essen (DE); GANDE, Udo, 47574 Goch (DE); TAUBITZ, Volker, 45479 Mülheim (DE); WECHSUNG, Michael, 45476 Mülheim (DE)
(86) Internationale Anmeldenummer: PCT/EP2001/004577
(87) Internationale Veröffentlichungsnummer: WO 2001/086122

(56) Entgegenhaltungen:
- WO-A-97/08431
- DE-C- 19 823 251
- US-A- 4 498 301
- US-A- 5 490 386
- PATENT ABSTRACTS OF JAPAN vol. 1997, no. 04, 30. April 1997 (1997-04-30) & JP 08 338205 A (TOSHIBA CORP), 24. Dezember 1996 (1996-12-24)

## Beschreibung

Die vorliegende Erfindung betrifft ein Verfahren und eine Vorrichtung zur Kühlung eines Einström-Wellenbereichs einer Dampfturbine (siehe zum Beispiel US-A- 4 498 301).

Die auf dieselbe Anmelderin zurückgehende DE 198 23 251 C1 beschreibt ein Verfahren und eine Vorrichtung zur Kühlung einer eines Einström-Wellenbereichs der Niederdruckstufe einer Dampfturbine. In dieser Druckschrift wird vorgeschlagen, in Abhängigkeit von den Verhältnissen in der Niederdruckstufe ein Kühlmedium, insbesondere Kondensat oder Dampf aus einem Kühlsystem, in die Niederdruckstufe einzuspritzen. Nachteilig bei diesem bekannten Vorgehen ist, daß die Einspritzung des Kühlmediums und die Zuführung des Frischdampfes getrennt und unabhängig voneinander kontrolliert werden müssen. Es sind daher Schnellschlußventile sowohl für das Kühlmedium als auch für den Frischdampf erforderlich. Diese Ventile müssen im wesentlichen gleichzeitig angesteuert werden und gleichzeitig schließen, um den erforderlichen Schutz gegen Überdrehzahl und zu hohen Kondensatordruck zu gewährleisten. Es ergeben sich eine aufwendige Konstruktion und Steuerung.

Aufgabe der vorliegenden Erfindung ist es daher, ein einfaches Verfahren zur Kühlung des Einström-Wellenbereichs einer Dampfturbine bereit zu stellen. Weiter soll eine Vorrichtung zur Kühlung des Einström-Wellenbereichs bereit gestellt werden, die einen einfachen konstruktiven Aufbau aufweist.

Das Grundkonzept der Erfindung sieht vor, den der Dampfturbine zugeführten Frischdampfstrom aufzuteilen. Ein Teilmassenstrom wird abgezweigt, abgekühlt und wieder zurückgeführt, während der verbleibende Massenstrom direkt zugeführt wird.

Zur Realisierung des erfindungsgemäßen Verfahrens ist insbesondere vorgesehen, daß stromaufwärts einer Zuführung für Dampf zu der Dampfturbine ein Teilmassenstrom abgezweigt, abgekühlt und anschließend zur Zuführung und von dieser mit dem verbleibenden Massenstrom in die Dampfturbine geleitet wird. Die erfindungsgemäße Vorrichtung sieht vor, daß die Frischdampfleitung eine Abzweigung zum Abführen eines abzukühlenden Teilmassenstroms aufweist, die stromabwärts einer Abkühleinrichtung für den Teilmassenstrom wieder zu der Zuführung zurückführt.

Es muß somit nur noch ein Schnellschlußventil vorgesehen werden, das stromaufwärts der Abzweigung angeordnet ist. Ein weiteres Schnellschlußventil für ein eingespritztes Kühlmedium kann entfallen. Der konstruktive Aufbau und die Steuerung werden wesentlich vereinfacht.

Vorteilhafte Ausgestaltungen und Weiterbildungen der Erfindung gehen aus den abhängigen Ansprüchen hervor.

In vorteilhafter Ausgestaltung ist der abgezweigte Teilmassenstrom kleiner als 10% des zugeführten Massenstroms und liegt insbesondere zwischen 5% und 7% des zugeführten Massenstrom. Hierdurch wird eine Abzweigung eines unzulässig großen Teilmassenstroms und damit eine Leistungsverringerung der Dampfturbine vermieden.

Vorteilhaft wird zur Abkühlung des Teilmassenstroms ein aus einer Hauptspeiseleitung entnommenes Fluid verwendet. Die Entnahme des Fluids erfolgt stromaufwärts eines Dampferzeugers oder eines Zwischenüberhitzers. Eine zusätzliche Versorgungsleitung ist nicht erforderlich.

In vorteilhafter erster Weiterbildung wird der Teilmassenstrom in einem Wärmetauscher abgekühlt. Das aus der Hauptspeiseleitung entnommene Fluid wird durch den Wärmetauscher geleitet und dabei erwärmt. Vorteilhaft wird es anschließend stromaufwärts des Dampferzeugers oder der Zwischenüberhitzung wieder in die Hauptspeiseleitung zurückgeführt. Es treten daher keine Wärmeverluste auf.

Nach einer vorteilhaften zweiten Weiterbildung wird der Teilmassenstrom durch Einspritzen eines Wasserstroms abgekühlt. Die Temperatur des Teilmassenstroms ist hierbei im allgemeinen so groß, daß der eingespritzte Wasserstrom vollständig verdampft und dann zusammen mit dem abgezweigten Teilmassenstrom zur Zuführung und von dieser in die Dampfturbine geleitet wird. Auch hier treten somit keine Wärmeverluste auf.

Gemäß einer vorteilhaften Ausgestaltung wird die Temperatur des abgekühlten Teilmassenstrom stromabwärts der Abkühlstelle gemessen. Die Temperatur des Teilmassenstroms kann somit gezielt auf einen vorgegebenen Sollwert eingestellt werden, wobei auch eine Steuerung oder Regelung der Temperatur möglich ist. Vorteilhaft wird der Sollwert in Abhängigkeit von den Zuständen in der zu kühlenden Dampfturbine festgelegt.

In vorteilhafter Weiterbildung werden der abgekühlte Teilmassenstrom und der verbleibende Massenstrom getrennt voneinander in die Dampfturbine geleitet. Der Teilmassenstrom kann dann gezielt an diejenigen Stellen geleitet werden, an denen eine Kühlung erforderlich ist. Der verbleibende Massenstrom kann demgegenüber direkt auf die Schaufeln der Dampfturbine geleitet werden.

Bei der erfindungsgemäßen Vorrichtung führt die Abzweigung von der Frischdampfzuleitung zu einem Wärmetauscher, der mit einem Fluid gekühlt wird, das aus einer Hauptspeiseleitung entnommen ist. Alternativ kann die Abzweigung zu einer Kühlkammer führen, in die aus einer Hauptspeiseleitung entnommenes Wasser einspritzbar ist. Eine weitere Zuführleitung ist nicht erforderlich. Darüber hinaus bleibt die dem Teilmassenstrom entnommene Wärme im System.

Vorteilhaft ist stromabwärts der Abkühlstelle ein Temperatursensor zur Messung der Temperatur des abgekühlten Teilmassenstroms angeordnet. Auf diese Weise kann der Teilmassenstrom gezielt auf eine vorgegebene Temperatur abgekühlt werden, die wiederum in Abhängigkeit von den Zuständen in der Dampfturbine vorgegeben wird. Der Temperatursensor kann dabei Teil eines Temperatur-Regelkreises oder einer Temperatur-Steuereinrichtung sein.

In vorteilhafter Ausgestaltung ist der Wärmetauscher beziehungsweise die Kühlkammer mit einer Entwässerung versehen. Die Entwässerung ermöglicht das Abführen von Kondensat und somit einen störungsfreien, ununterbrochenen Betrieb.

Gemäß einer vorteilhaften Weiterbildung weist die Zuführung eine Düse für den verbleibenden Massenstrom und eine weitere Düse für den abgekühlten Teilmassenstrom auf. Ein Vermischen der beiden Massenströme wird vermieden. Der abgekühlte Teilmassenstrom kann daher gezielt in den zu kühlenden Einströmwellenbereich geleitet werden, während der verbleibende Massenstrom direkt auf die Schaufeln der Dampfturbine gelenkt werden kann.

Nachstehend wird die Erfindung an Hand von Ausführungsbeispielen näher beschrieben, die schematisch in der Zeichnung dargestellt sind. Für gleiche oder funktionsidentische Bauteile werden dieselben Bezugszeichen verwendet. Dabei zeigt:
- Figur 1: eine schematische Darstellung einer erfindungsgemäßen Vorrichtung in erster Ausgestaltung; und
- Figur 2: einen schematische Darstellung einer erfindungsgemäßen Vorrichtung in zweiter Ausgestaltung.

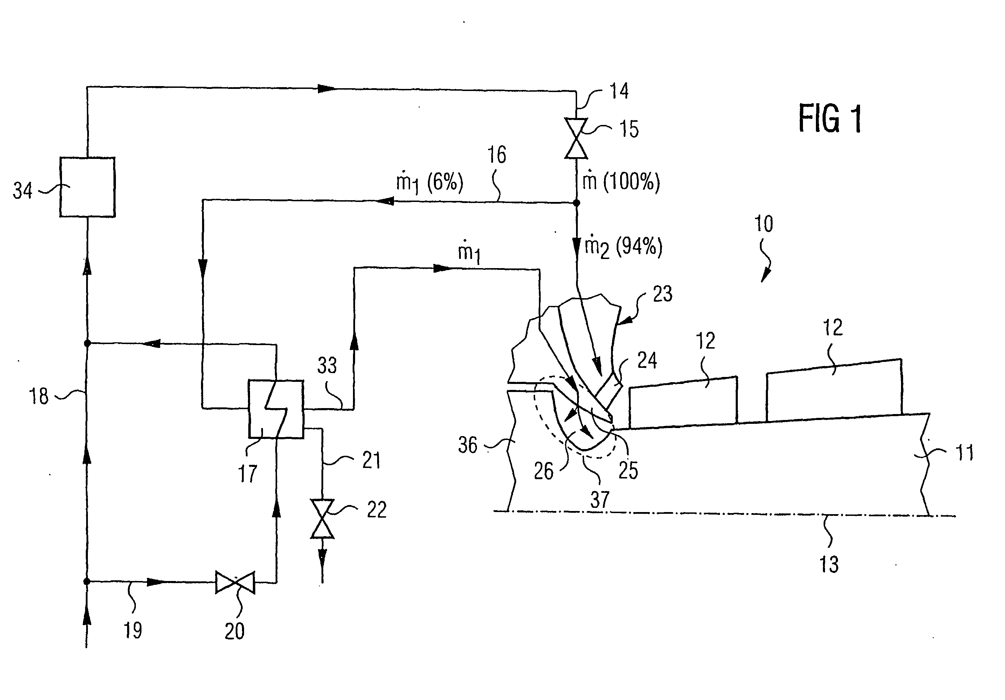

In Figur 1 ist schematisch eine Dampfturbine 10 mit einem Rotor 11 und Laufschaufeln 12 dargestellt. Der Rotor 11 ist um eine Achse 13 drehbar.

Der zum Betrieb der Dampfturbine 10 erforderliche Dampf wird über eine Frischdampfzuleitung 14 mit einem Schnellschlußventil 15 zugeführt. Die Frischdampfzuleitung 14 wird über eine Hauptspeiseleitung 18 und einen Dampferzeuger oder Zwischenerhitzer 34 mit Dampf versorgt. Zwischen den Dampferzeuger oder Zwischenerhitzer 34 und eine Zuführung 23 von Dampf zu der Dampfturbine 10 ist das Schnellschlußventil 15 geschaltet. Falls die Dampfturbine 10 abgeschaltet werden soll, kann die gesamte Dampfzufuhr durch Schließen des Schnellschlußventils 15 unterbrochen werden.

Zur Kühlung eines mit Strichlinien angedeuteten Einström-Wellenbereichs 37 der Dampfturbine 10 wird der insgesamt zugeführte Massenstrom *ṁ* stromaufwärts der Zuführung 23 in Teilmassenströme *ṁ*₁, *ṁ*₂ geteilt. Es wird über eine Abzweigung 16 ein Teilmassenstrom *ṁ*₁ abgezweigt und zu einem Wärmetauscher 17 geleitet. Zur Kühlung wird der Hauptspeiseleitung 18 Wasser über eine Speiseleitung 19 entnommen. Die Speiseleitung 19 kann über ein Ventil 20 geschlossen werden. Am Austritt des Wärmetauschers 17 wird das entnommene Wasser stromaufwärts des Dampferzeugers oder Zwischenüberhitzers 34 wieder in die Hauptspeiseleitung 18 zurück gespeist. Die dem Teilmassenstrom *ṁ*₁ entzogene Wärme bleibt somit erhalten. Der abgekühlte Teilmassenstrom *ṁ*₁ wird wieder zur Zuführung 23 und von dieser in die Dampfturbine 10 geleitet.

Der Wärmetauscher 17 ist mit einer Entwässerungsleitung 21 mit einem Ventil 22 versehen. Eventuell anfallendes Kondensat im Wärmetauscher 17 kann über die Entwässerungsleitung 21 abgeführt werden.

Die Zuführung 23 weist eine erste Düse 24 für den verbleibenden Massenstrom *ṁ*₂ und eine zweite Düse 25 für den abgezweigten, abgekühlten Massenstrom *ṁ*₁ auf. Die Düse 24 leitet den verbleibenden Massenstrom *ṁ*₂ auf die Laufschaufeln 12 des Rotors 11 und versetzt diesen in Drehung. Die Düse 25 leitet den abgekühlten Teilmassenstrom *ṁ*₁ in eine in Umfangsrichtung des Rotors 11 umlaufende Nut 26 im Bereich der Zuführung 23. Der Rotor 11 und damit die Welle der Dampfturbine 10 werden daher im Einström-Wellenbereich 37 zuverlässig gekühlt. Es wird insbesondere ein für den Schubausgleich in axialer Richtung erforderlicher Kolben 36 gekühlt.

Der Anteil des Teilmassenstroms *ṁ*₁ am insgesamt zugeführten Massenstrom *ṁ*₁ beträgt zwischen 5% und 7%, insbesondere 6%.

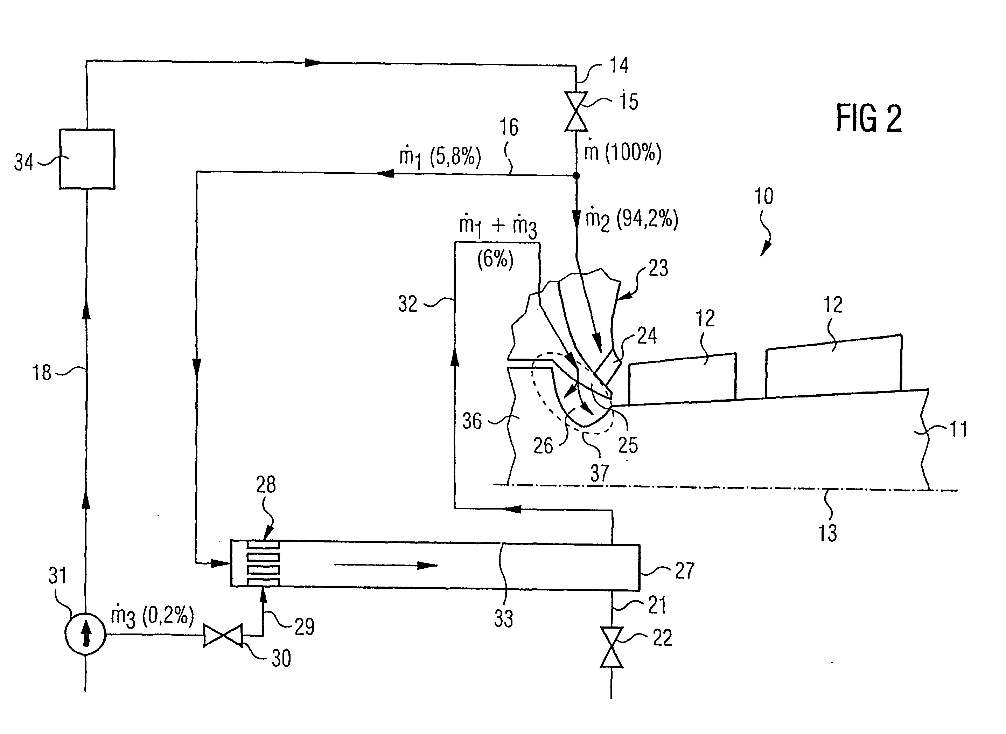

Beim Ausführungsbeispiel gemäß Figur 2 wird ebenfalls ein Teilmassenstrom *ṁ*₁ abgezweigt und einer Kühlkammer 27 zugeführt. In der Kühlkammer 27 ist eine Zweistoffkühlung 28 vorgesehen, in der aus der Hauptspeiseleitung 18 entnommenes Wasser 29 eingespritzt wird. Das Wasser wird über eine Speisewasserleitung 29 mit einem Schnellschluß-Regelventil 30 und einer Pumpe 31 zugeführt. Hierdurch wird eine hochgenaue Dosierung des zugeführten Wasserstrom *ṁ*₃ ermöglicht.

In der Kühlkammer 27 verdampft der eingespritzte Wasserstrom *ṁ*₃ und vermischt sich mit dem Teilmassenstrom *ṁ*₁. Die beiden Massenströme *ṁ*₁ + *ṁ*₃ werden dann über eine weitere Leitung 32 der Düse 25 der Zuführung 23 zugeführt.

Der im Ausführungsbeispiel gemäß Figur 2 abgezweigte Teilmassenstrom *ṁ*₁ ist etwas kleiner als beim Ausführungsbeispiel gemäß Figur 1. Grund hierfür ist, daß durch das Einspritzen des Wasserstroms *ṁ*₃ der Dampfturbine 10 ein größerer Massenstrom *ṁ*₁ + ṁ₃ zugeführt wird als beim Ausführungsbeispiel gemäß Figur 1. Der abgezweigte Teilmassenstrom *ṁ*₁ kann beim Ausführungsbeispiel gemäß Figur 2 beispielsweise 5,8% des zugeführten Massenstroms *ṁ* betragen, während der Wasserstrom *ṁ*₃ 0,2% beträgt.

In beiden Ausgestaltungen (Figur 1 und Figur 2) ist stromabwärts der Abkühlstelle, also stromabwärts des Wärmetauschers 18 oder der Zweistoffkühlung 28, eine Meßstelle 33 zur Erfassung der Temperatur des Teilmassenstroms *ṁ*₁ beziehungsweise *ṁ*₁ + *ṁ*₃ vorgesehen. Die an der Meßstelle 33 gemessene Temperatur wird mit einem vorgegebenen Sollwert verglichen. In Abhängigkeit vom Ergebnis dieses Vergleichs wird die Beaufschlagung des Wärmetauschers 17 oder der Zweistoffkühlung 28 angepaßt. Die Temperatur des der Dampfturbine 10 zugeführten, abgekühlten Teilmassenstroms *ṁ*₁ beziehungsweise *ṁ*₁ + *ṁ*₃ kann mit diesem Vorgehen gezielt auf der jeweils gewünschten Temperatur gehalten und somit an die Bedingungen in der Dampfturbine 1.0 angepaßt werden.

Falls die Dampfturbine 10 abgeschaltet werden soll, muß lediglich das Schnellschlußventil 15 geschlossen werden. Hierdurch wird jegliche Frischdampfzufuhr zu der Dampfturbine 10 unterbrochen. Das Schließen der Ventile 20, 30 kann ohne Schwierigkeiten mit geringer Verzögerung erfolgen. Beschädigungen sind nicht zu erwarten. Insbesondere kann bei der Ausgestaltung gemäß Figur 2 zuviel eingespritztes Wasser über die Entwässerungsleitung 21 abgeführt werden. Ein gesondertes Schnellschlußventil zum Absperren eines Kühlmediums, das der Dampfturbine 10 getrennt vom insgesamt zugeführten Massenstrom *ṁ* zugeführt wird, ist nicht erforderlich. Der konstruktive Aufbau sowie die Steuerung werden daher wesentlich vereinfacht.

## Patentansprüche

1. Verfahren zur Kühlung eines Einström-Wellenbereichs (37) einer Dampfturbine (10),
**dadurch gekennzeichnet, daß** stromaufwärts einer Zuführung (23) für Dampf zu der Dampfturbine (10) ein Teilmassenstrom (*ṁ*₁) abgezweigt, abgekühlt und anschließend zur Zuführung (23) und von dieser mit dem verbleibenden Massenstrom (*ṁ*₂) in die Dampfturbine (10) geleitet wird.

2. Verfahren nach Anspruch 1,
**dadurch gekennzeichnet, daß** der abgezweigte Teilmassenstrom (*ṁ*₁) kleiner ist 10 % des zugeführten Massenstroms (*ṁ*), insbesondere zwischen 5 % und 7 % des zugeführten Massenstroms (*ṁ*) liegt.

3. Verfahren nach Anspruch 1 oder 2,
**dadurch gekennzeichnet, daß** zur Abkühlung des Teilmassenstroms (*ṁ*₁) aus einer Hauptspeiseleitung (18) entnommenes Fluid verwendet wird.

4. Verfahren nach einem der Ansprüche 1 bis 3,
**dadurch gekennzeichnet, daß** der Teilmassenstrom (*ṁ*₁) in einem Wärmetauscher (17) abgekühlt wird.

5. Verfahren nach einem der Ansprüche 1 bis 3,
**dadurch gekennzeichnet, daß** der Teilmassenstrom (*ṁ*₁) durch Einspritzen eines Wasserstroms (*ṁ*₃) abgekühlt wird.

6. Verfahren nach einem der Ansprüche 1 bis 5,
**dadurch gekennzeichnet, daß** die Temperatur des abgekühlten Teilmassenstroms (*ṁ*₁; *ṁ*₁ + *ṁ*₃) stromabwärts der Abkühlstelle (17; 28) gemessen wird.

7. Verfahren nach einem der Ansprüche 1 bis 6,
**dadurch gekennzeichnet, daß** der abgekühlte Teilmassenstrom (*ṁ*₁; *ṁ*₁ + *ṁ*₃) und der verbleibende Massenstrom (*ṁ*₂) getrennt voneinander in die Dampfturbine (10) geleitet werden.

8. Vorrichtung zur Kühlung eines Einström-Wellenbereichs (37) einer Dampfturbine (10), insbesondere zur Kühlung gemäß einem Verfahren nach einem der vorstehenden Ansprüche, mit einer Frischdampfleitung (14) und einer Zuführung (23) zum Zuführen von Dampf zu der Dampfturbine (10),
**dadurch gekennzeichnet, daß** die Frischdampfleitung (14) eine Abzweigung (16) zum Abführen eines abzukühlenden Teilmassenstroms (*ṁ*₁) aufweist, die stromabwärts einer Abkühleinrichtung (17; 27) für den Teilmassenstroms (*ṁ*₁) wieder zu der Zuführung (23) zurückführt.

9. Vorrichtung nach Anspruch 8,
**dadurch gekennzeichnet, daß** die Abzweigung (16) zu einem Wärmetauscher (17) führt, der mit einem Fluid gekühlt wird, das aus einer Hauptspeiseleitung (18) entnommen ist.

10. Vorrichtung nach Anspruch 8,
**dadurch gekennzeichnet, daß** die Abzweigung (16) zu einer Kühlkammer (27) führt, in die aus einer Hauptspeiseleitung (18) entnommenes Wasser (*ṁ*₃) einspritzbar ist.

11. Vorrichtung nach Anspruch 9 oder 10,
**dadurch gekennzeichnet, daß** der Abkühlstelle (17; 28) ein Temperatursensor (33) zur Messung der Temperatur des abgekühlten Teilmassenstroms (*ṁ*₁; *ṁ*₁ + *ṁ*₃) angeordnet ist.

12. Vorrichtung nach einem der Ansprüche 9 bis 11,
**dadurch gekennzeichnet, daß** der Wärmetauscher (17) beziehungsweise dieKühlkammer (27) mit einer Entwässerung (21, 22) versehen ist.

13. Vorrichtung nach einem der Ansprüche 8 bis 12,
**dadurch gekennzeichnet, daß** die Zuführung (23) eine Düse (24) für den verbleibenden Massenstrom (*ṁ*₂) und eine weitere Düse (25) für den abgekühlten Teilmassenstrom (*ṁ*₁; *ṁ*₁ + *ṁ*₃) aufweist.

## Claims

1. Method for cooling a shaft region (37) at the inlet flow to a steam turbine (10), **characterized in that** a partial mass flow (*ṁ*₁) is branched off (upstream of a supply system (23) for steam to the steam turbine (10)), cooled and subsequently conducted to the supply system (23) and from the latter, together with the residual mass flow (*ṁ*₂), into the steam turbine (10).

2. Method according to Claim 1, **characterized in that** the partial mass flow (*ṁ*₁) branched off is less than 10% of the mass flow (*ṁ*) supplied, in particular between 5% and 7% of the mass flow (*ṁ*) supplied.

3. Method according to Claim 1 or 2, **characterized in that** fluid extracted from a principal feed main (18) is used for cooling the partial mass flow (*ṁ*₁).

4. Method according to one of Claims 1 to 3, **characterized in that** the partial mass flow (*ṁ*₁) is cooled in a heat exchanger (17).

5. Method according to one of Claims 1 to 3, **characterized in that** the partial mass flow (*ṁ*₁) is cooled by injecting a flow of water (*ṁ*₃).

6. Method according to one of Claims 1 to 5, **characterized in that** the temperature of the cooled partial mass flow (*ṁ*₁; *ṁ*₁ + *ṁ*₃) is measured downstream of the cooling location (17; 28).

7. Method according to one of Claims 1 to 6, **characterized in that** the cooled partial mass flow (*ṁ*₁; *ṁ*₁ + *ṁ*₃) and the residual mass flow (*ṁ*₂) are fed into the steam turbine (10) separately from one another.

8. Appliance for cooling a shaft region (37) at the inlet flow to a steam turbine (10), in particular for cooling according to a method as claimed in one of the preceding claims, having a live steam main (14) and a supply system (23) for supplying steam to the steam turbine (10), **characterized in that** the live steam main (14) has a branch (16) for extracting a partial mass flow (*ṁ*₁) to be cooled, which branch (16) returns to the supply system (23) downstream of a cooling device (17; 27) for the partial mass flow (*ṁ*₁).

9. Appliance according to Claim 8, **characterized in that** the branch (16) leads to a heat exchanger (17), which is cooled by a fluid extracted from a principal feed main (18).

10. Appliance according to Claim 8, **characterized in that** the branch (16) leads to a cooling chamber (27), into which water (*ṁ*₃) extracted from a principle feed main (18) can be injected.

11. Appliance according to Claim 9 or 10, **characterized in that** a temperature sensor (33) for measuring the temperature of the cooled partial mass flow (*ṁ*₁; *ṁ*₁ + *ṁ*₃) is arranged of the cooling location (17; 28).

12. Appliance Appliance according to one of Claims 9 to 11, **characterized in that** the heat exchanger (17) or the cooling chamber (27) is provided with a drainage system (21, 22).

13. Appliance according to one of Claims 8 to 12, **characterized in that** the supply system (23) has a nozzle (24) for the residual mass flow (*ṁ*₂) and a further nozzle (25) for the cooled partial mass flow (*ṁ*₁; *ṁ*₁ + *ṁ*₃).

## Revendications

1. Procédé de refroidissement d'une zone (37) d'arbre d'entrée d'une turbine (10) à vapeur,
**caractérisé en ce qu'**en amont d'une entrée (23) de vapeur dans la turbine (10) à vapeur, on dérive un courant (*m*₁) massique partiel, on le refroidi et on l'envoie ensuite à l'entrée (23) et de celle-ci avec le courant (*m*₂) massique restant à la turbine (10) à vapeur.

2. Procédé suivant la revendication 1,
**caractérisé en ce que** le courant (*m*₁) massique partiel dérivé représente moins de 10% du courant (*m*) massique qui entre, notamment entre 5% et 7% du courant (*m*) massique qui entre.

3. Procédé suivant la revendication 1 ou 2,
**caractérisé en ce que** pour le refroidissement du courant (*m*₁) massique partiel, on utilise du fluide prélevé d'un conduit (18) principal d'alimentation.

4. Procédé suivant l'une des revendications 1 à 3,
**caractérisé en ce que** l'on refroidi la courant (*m*₁) massique partiel dans un échangeur de chaleur (17).

5. Procédé suivant l'une des revendications 1 à 3,
**caractérisé en ce que** l'on refroidi le courant (*m*₁) massique partiel par injection d'un courant (*m*₃) d'eau.

6. Procédé suivant l'une des revendications 1 à 5,
**caractérisé en ce que** l'on repère à la température (*m*_{1;} *m*₁ + *m*₃) massique partiel refroidi en aval du point (17; 28) de refroidissement.

7. Procédé suivant l'une des revendications 1 à 6,
**caractérisé en ce que** l'on envoie séparément l'un de l'autre à la turbine (10) à vapeur, le courant (*m*_{1;} *m*₁ + *m*₃) massique partiel refroidi et le courant (*m*₂) massique restant.

8. Dispositif de refroidissement d'une zone (37) d'arbre d'entrée d'une turbine (10) à vapeur, notamment de refroidissement suivant un procédé selon l'une des revendications précédentes, comprenant un conduit (14) pour de la vapeur fraîche et une entrée (23) pour faire entrer de la vapeur dans la turbine (10) à vapeur,
**caractérisé en ce que** le conduit (14) pour la vapeur fraîche comporte une dérivation (16) de sortie d'un courant (*m*₁) massique partiel à refroidir qui, en aval d'un dispositif (17; 27) de refroidissement du courant (*m*₁) massique partiel, retourne à l'entrée (23).

9. Dispositif suivant la revendication 8,
**caractérisé en ce que** la dérivation (16) mène à un échangeur de chaleur (17), qui est refroidi par un fluide prélevé d'un conduit (18) principal d'alimentation.

10. Dispositif suivant la revendication 8,
**caractérisé en ce que** la dérivation (16) mène à une chambre (27) de refroidissement, dans laquelle de l'eau (*m*₃) prélevée d'un conduit (18) principal d'alimentation peut être injectée.

11. Dispositif suivant la revendication 9 ou 10,
**caractérisé en ce qu'**il est disposé au point (17; 28) de refroidissement un capteur (33) de température de repérage de la température du courant (*m*_{1;} *m*₁ + *m*₃) massique partiel refroidi.

12. Dispositif suivant l'une des revendications 9 à 11,
**caractérisé en ce que** l'échangeur de chaleur (17) ou la chambre (27) de refroidissement est muni d'une dessiccation (21, 22).

13. Dispositif suivant l'une des revendications 8 à 12,
**caractérisé en ce que** l'entrée (23) comporte une buse (24) pour le courant (*m*₂) massique restant et une autre buse (25) pour le courant (*m*_{1;} *m*₁ + *m*₃) massique partiel refroidi.
